# EUROPÄISCHE PATENTSCHRIFT

(11) **EP 2 164 697 B1**
(45) Veröffentlichungstag und Bekanntmachung des Hinweises auf die Patenterteilung: **26.03.2014**
(21) Anmeldenummer: 08759445.3
(22) Anmeldetag: 07.05.2008
(51) Int. Cl.: B29D 30/44, B65G 13/12, B65G 21/14

(54) **ZUFÜHRUNGSEINRICHTUNG FÜR STREIFENFÖRMIGE BAUTEILE**
DEVICE FOR SUPPLYING STRIP-SHAPED COMPONENTS
DISPOSITIF POUR ACHEMINER DES COMPOSANTS EN FORME DE RUBAN

(30) Priorität: 10.07.2007 DE 102007031988
(43) Veröffentlichungstag der Anmeldung: 24.03.2010
(73) Patentinhaber: Continental Reifen Deutschland GmbH, 30165 Hannover (DE)
(72) Erfinder: HANKE, Andreas, 30449 Hannover (DE)
(74) Vertreter: Finger, Karsten
(86) Internationale Anmeldenummer: PCT/EP2008/055590
(87) Internationale Veröffentlichungsnummer: WO 2009/007153

(56) Entgegenhaltungen:
- DE-A1- 3 636 857
- DE-C1- 4 023 585
- US-A- 4 333 788
- US-A- 5 040 655
- DATABASE WPI Week 1989 Thomson Scientific, London, GB; AN 1989-232900 XP002490841 & SU 1 454 765 A (KOSKIN V N) 30. Januar 1989 (1989-01-30)

## Beschreibung

Die Erfindung betrifft eine Zuführungseinrichtung für streifenförmige Bauteile zu einer Aufbautrommel, auf der ein ringförmiges Vorfabrikat, insbesondere für Luftreifen oder Luftfederbälge herstellbar ist, mit einer ersten Fördereinrichtung und einem relativ zu der ersten Fördereinrichtung in Förderrichtung verfahrbaren Servicer, wobei der Servicer in Linie und in gleicher Höhe mit der ersten Fördereinrichtung die streifenförmigen Bauteile kontaktiert und die streifenförmigen Bauteile von der ersten Fördereinrichtung auf den Servicer übergebbar sind.

Derartige Zuführungseinrichtungen sind an sich bekannt und werden beispielsweise in der Luftreifenfertigung eingesetzt, um Verstärkungs- oder Gürtellagen zu der Aufbautrommel zu fördern. Der Servicer ist dabei die Zubringereinheit, die durch Vor- und Zurückbewegung die streifenförmigen Bauteile von der ersten Fördereinrichtung zu der Aufbautrommel befördert.

Der Servicer ist dabei relativ zur meist feststehenden ersten Fördereinrichtung in Richtung auf die Aufbautrommel vorschiebbar und rückziehbar angeordnet, so dass das auf der Aufbautrommel aufgewickelte Vorfabrikat in vorgeschobenem Zustand des Servicers problemlos mit den streifenförmigen Bauteilen bewickelbar ist und in zurückgezogenem Zustand des Servicers von der Aufbautrommel leicht entnehmbar ist.

Bei den streifenförmigen Bauteilen aus noch unvulkanisierten Gummimaterialien, beispielsweise also bei den aus gummierten Festigkeitsträgern bestehenden Gürtellagen, besteht das Erfordernis, das streifenförmige Bauteil ohne Dehnungen, Biegungen und andere Verformungen, also möglichst in flacher Auflage auf einer ebenen Unterlage, bis zur Aufbautrommel zu fördern. Die Förderlinien sollen daher möglichst keinerlei Bogen-oder Kurvenführungen für die Bauteile enthalten und müssen Fördereinrichtungen aufweisen, die das Bauteil in möglichst flacher Auflage und ausschließlich in gerader Richtung von den Zuführungseinrichtungen bis zu einem für alle Bauteile gleichen Auflagepunkt auf die Aufbautrommel fördern.

Die DE 199 38 149 C2 oder die DE 42 32 276 C2 zeigen derartige Einrichtungen, bei denen die bereits im Vorfeld auf Länge beschnittenen Materialstreifenabschnitte zu der Aufbautrommel förderbar sind.

In der DE 30 04 894 C2 ist eine Vorrichtung offenbart, bei der im Bereich der im Vorfeld angeordneten Schneidvorrichtung ein zwischen zwei nacheinander angeordneten Förderanlagen zeitweise auftretender Spalt durch die Hin- und Herbewegung einer der beteiligten Förderanlage überbrückbar ist. Da aufgrund der vergleichsweise dünnen, leicht plastisch verformbaren Streifenmaterialien eine Relativbewegung des Streifens gegen eine der Fördereinrichtungen während der Hin- und Herbewegung ausgeschlossen werden muss, ist hier durch ein Übetragungsglied und eine darauf schaltbare Kupplung eine entsprechende Ansteuerung der sich bewegenden Fördereinrichtung derart gegeben, dass sich zwar die Einrichtung selbst bewegt, die darauf angeordneten, den Materialstreifen tragenden Förderbänder gegenüber dem Materialstreifen jedoch stillstehen.

In allen diesen bekannten Vorrichtungen ist also nur ein bereits abgelängtes Bauteil zu fördern. Bei der Übergabe dieses Bauteils auf den Servicer kann dieser das Bauteil in allen Fällen in seiner gesamten Länge aufnehmen und durch Vorfahren zur Aufbautrommel befördern. Ein dabei zu den feststehenden Teilen der Förderanlage entstehender Spalt ist in diesen Fällen ohne Bedeutung für das streifenförmige Bauteil.

Es ist jedoch zur Verbesserung der Flexibilität der Anlage denkbar, die auf die Aufbautrommel aufgewickelten streifenförmigen Bauteile erst vor Ort, also unmittelbar an der Aufbautrommel zu beschneiden. Im Vorfeld angeordnete Schneideinrichtungen können dann entfallen.

Die DE 24 49 307 A zeigt eine Beschickungsvorrichtung für eine Reifenaufbaumaschine, bei der ein Materialstreifen der Reifenautbautrommel zugeführt wird und nach dem Aufrollen auf einen Rohling vor Ort abgeschnitten wird. Auch hier ist eine vor- und zurückfahrende Servicereinheit vorgesehen, die den Streifen der Reifenaufbautrommel zuführt.

Eine Unterstützung des bis an das Ende des ausgefahrenen Servicers unzerteilt durchgehenden Materialbahn in dem zwischen der Servicereinheit und dem feststehenden Rest der Aufbaumaschine auftretenden Spalt ist nicht vorgesehen. Statt dessen wird eine elektronische Steuerung eingesetzt, die die Spannung und den Durchhang der Materialbahn in engen Grenzen halten soll.

Diese Regelung ist jedoch aufwändig und es besteht die Gefahr, dass der Materialstreifen aufgrund des Durchhangs trotz der Steuerung unerwünschte plastische Dehnungen erfährt.

Die US 5040655 - A offenbart eine Zuführungseinrichtung, die die Merkmale im Oberbegriff des Anspruchs 1 aufweist.

Der Erfindung liegt die Aufgabe zugrunde, eine Zuführungseinrichtung der eingangs geschilderten Art zu schaffen, die es ermöglicht, auch unzerteilte streifenförmige Bauteile unter Vermeidung einer aufwändigen Regelung ohne unerwünschte plastische Verformungen mittels eine verschiebbaren Servicers zu der Aufbautrommel zu befördern.

Diese Aufgabe wird gemäß Anspruch 1 dadurch gelöst, dass die Zuführungseinrichtung eine Unterstützungsbahn aufweist, die beim Ausfahren des Servicers in den Spalt zwischen der ersten Fördereinrichtung und dem Servicer hinein verfahrbar ist und beim Zurückfahren des Servicers aus dem Spalt zwischen der ersten Fördereinrichtung und dem Servicer heraus verfahrbar ist, wobei die Unterstützungsbahn bei Auftreten des Spalts zwischen der ersten Fördereinrichtung und dem Servicer mit den streifenförmigen Bauteilen derart in Kontakt steht, dass die streifenförmigen Bauteile in gleicher Höhe mit der ersten Fördereinrichtung und dem Servicer ohne Durchhang von der ersten Fördereinrichtung auf den Servicer förderbar sind.

Eine derartige Unterstützungsbahn hat den Vorteil, dass die streifenförmigen Bauteile bei ausgefahrenem Servicer ohne durchzuhängen über die Unterstützungsbahn auf den Servicer förderbar sind. Eine Regelung der Spannung in den streifenförmigen Bauteilen ist nicht erforderlich.

Da die Unterstützungsbahn bei zurückfahrendem Servicer aus dem Spalt herausfahrbar ist, kann der Servicer problemlos an die erste Fördereinrichtung zurückgefahren werden. Auch in diesem Zustand ist dann eine unterbrechungsfreie Förderung der streifenförmigen Bauteile möglich. Vorteilhafte Ausgestaltungen der Erfindung sind Gegenstand der abhängigen Ansprüche.

In einer Weiterbildung der Erfindung weist die Unterstützungsbahn ein Gestell mit in Förderrichtung seitlich angeordneten Seitenteilen auf, wobei an den Seitenteilen umlaufende Bänder angeordnet sind, die an den jeweiligen Enden der Seitenteile durch auf der Unterstützungsbahn ortsfest installierte Umlenkrollen umlenkbar sind, und die durch den Servicer synchron antreibbar sind und an denen jeweils in vorbestimmten Längsabständen eine Vielzahl von paarweise von Band zu Band quer zur Förderrichtung gegenüberliegenden Lagerböcken angeordnet ist, wobei jeweils ein Lagerbockpaar eine Tragrolle aufweist, die in den Lagerböcken drehbar gelagert ist und durch die bei Auftreten des Spalts zwischen erster Fördereinrichtung und Servicer die streifenförmigen Bauteile kontaktierbar sind.

Die seitlich angeordneten umlaufenden Bänder haben den Vorteil großer Flexibilität und lassen sich auf einfache Weise vom Servicer antreiben. Insbesondere beim Zurückfahren des Servicers ist diese Anordnung vorteilhaft, da bei synchron mit dem Servicer zurücklaufenden Bändern die Lagerböcke mit den nicht mehr im Kontakt mit den streifenförmigen Bauteilen befindlichen Tragrollen einfach in die Untertrums der Bänder ziehbar sind, so dass der Servicer an die erste Fördereinrichtung zurückfahrbar ist, wobei der Spalt kontinuierlich abnimmt, die streifenförmigen Bauteile dabei aber ständig durch die noch im Spalt verbleibenden Tragrollen unterstützbar sind. In zurückgefahrenem Zustand des Servicers sind alle Tragrollen in die Untertrums der Bänder gezogen, so dass sie dem Servicer beim Heranfahren an die erste Fördereinrichtung nicht im Weg sind.

In einer Weiterbildung der Erfindung ist die Unterstützungsbahn mit ihrem Gestell schmaler ausgebildet als der Servicer, wobei der Servicer um das Gestell der Unterstützungsbahn herumgreift und derart verfahrbar ist, dass bei eingefahrenem Servicer das Gestell der Unterstützungsbahn im Wesentlichen im Inneren des Servicers angeordnet ist.

Diese Anordnung hat den Vorteil, dass ein zusätzlicher Raumbedarf für die Unterstützungsbahn nicht erforderlich ist.

In einer Weiterbildung der Erfindung weist der Servicer einen quer zur Förderrichtung angeordneten Mitnehmersteg auf, der durch Bohrungen in den Bändern durch die Bänder hindurch an Mitnehmersteinen befestigbar ist, wobei je ein Mitnehmerstein an der Unterseite jeweils eines Bandes anliegt.

Eine derartige Anordnung hat den Vorteil, dass einerseits die in die Bänder einleitbaren Kräfte durch eine vorbestimmte, mit dem Mitnehmersteg korrespondierende Länge der Mitnehmersteine, besonders groß ist, da sich die Krafteinleitungszone über die Länge der Einspannung des Riemens zwischen Mitnehmersteg und Mitnehmersteinen verteilt, dass andererseits auch die Verbindung zwischen den Bändern und dem Servicer besonders einfach, beispielsweise durch eine Verschraubung zwischen Mitnehmersteg und Mitnehmersteinen und einer entsprechenden Justage der Höhenlage des Mitnehmersteges relativ zu der Unterstützungsbahn gut einstellbar und gegebenenfalls auch lösbar ist.

In einer Weiterbildung der Erfindung laufen die Bänder in Führungsschienen, die an den Seitenteilen des Gestells der Unterstützungsbahn angeordnet sind und die auf den der Innenseite der Bänder zugewandten Seiten Längsnuten aufweisen, wobei die Längsnuten schmaler sind als die Bänder.

Derartige Längsnuten haben den Vorteil, dass die Mitnehmersteine in der Nut gleiten können.

In einer Weiterbildung der Erfindung weisen die Mitnehmersteine eine T-Form auf, wobei die T-Arme der T-förmigen Mitnehmersteine der Innenseite der Bänder zugeordnet sind und breiter sind, als die Längsnuten der Führungsschienen, so dass die T-Arme der Mitnehmersteine zwischen den Führungsschienen und den Bändern angeordnet sind.

Durch eine derartige Form der Mitnehmersteine ist eine besonders große Auflagefläche zwischen den Mitnehmersteinen und den Bändern erreichbar. Die Füße der T-förmigen Mitnehmersteine laufen dann in den Längsnuten der Führungsschienen. Damit ist sichergestellt, dass die Bänder auch bei Krafteinleitung ihre relative Lage zu den Seitenteilen des Gestells der Unterstützungsbahn nicht verlassen und ein zuverlässiges Hin- und Herziehen der Bänder durch den Servicer möglich ist.

In einer Weiterbildung der Erfindung ist der Verbund aus Mitnehmersteg, Bändern und Mitnehmersteinen in montiertem Zustand derart eingestellt, dass die Arme der T-förmigen Mitnehmersteine und die Böden der Füße der Mitnehmersteine von den korrespondierenden Flächen der Führungsschienen durch einen Spalt beabstandet sind.

Eine entsprechende Einstellung durch einen in der Höhe verstellbaren Mitnehmersteg, der beispielsweise über Langlöcher an dem Servicer anschraubbar ist, lässt sich ein Kontakt der genannten Teile der Mitnehmersteine mit den Führungsschienen vermeiden. Dies sorgt für einen verschleißarmen Betrieb der Unterstützungsbahn. Die Füße der T-förmigen Mitnehmersteine berühren dann die Führungsschiene in den Längsnuten nur noch mit ihren Seitenflächen.

In einer Weiterbildung der Erfindung sind die Bänder der Unterstützungsbahn als Zahnriemen ausgebildet, wobei die Verzahnung auf der Innenseite der umlaufenden Zahnriemen angeordnet ist.

Bei der Verwendung von Zahnriemen mit innenliegender Verzahnung liegen nur die Bereiche der Zähne auf den Führungsschienen auf, die seitlich über die Längsnuten der Führungsschienen hinausragen. Dadurch wird die zur Überwindung der Reibung benötigte Kraft, die über den Mitnehmersteg und die Mitnehmersteine in die Bänder eingeleitet werden, deutlich reduziert und damit die Krafteinleitungsstelle entlastet. Die Verzahnung bietet außerdem den Vorteil, dass die Krafteinleitung in der Verbindung von Mitnehmersteg und Mitnehmersteinen durch einen Formschlussanteil unterstützt wird.

In einer Weiterbildung der Erfindung sind die umlaufenden Bänder aus je einem Bandabschnitt vorbestimmter Länge derart ausgebildet, dass die Bandabschnitte an ihren Enden stumpf aneinanderstoßend zu einem Ring zusammensetzbar sind und die Stoßstellen im Wesentlichen mittig zwischen dem Mitnehmersteg des Servicers und den jeweiligen Mitnehmersteinen liegen, wobei durch den Mitnehmersteg und die Mitnehmersteine die kraft-und/oder formschlüssige Verbindung der Bandenden zu dem Ring gebildet ist.

Diese Anordnung hat den Vorteil, dass die Montage der Bänder auf die Führungsschienen und um die Umlenkrollen vereinfacht ist. Aufwändige Nähte oder Klebverbindungen der Bänder sind nicht erforderlich. Auch der Austausch ggf. verschlissener Bänder ist durch eine lösbare Verbindung zwischen Mitnehmersteg und Mitnehmersteinen einfach möglich.

In einer Weiterbildung der Erfindung sind die Tragrollen synchron zur Fördergeschwindigkeit des streifenförmigen Bauteils durch einen eigenen Antrieb antreibbar.

Indem die Tragrollen antreibbar sind, beispielsweise durch einen separaten Treibriemen oder Rohrmotoren, müssen die Tragrollen nicht durch die streifenförmigen Bauteile in Drehung versetzt werden. Dies reduziert die Kräfte, mit denen das streifenförmige Bauteil über die Unterstützungsbahn gezogen werden muss, wenn kein eigener Antrieb für die Tragrollen vorgesehen ist, je nach Antriebsleistung ggf. bis auf Null.

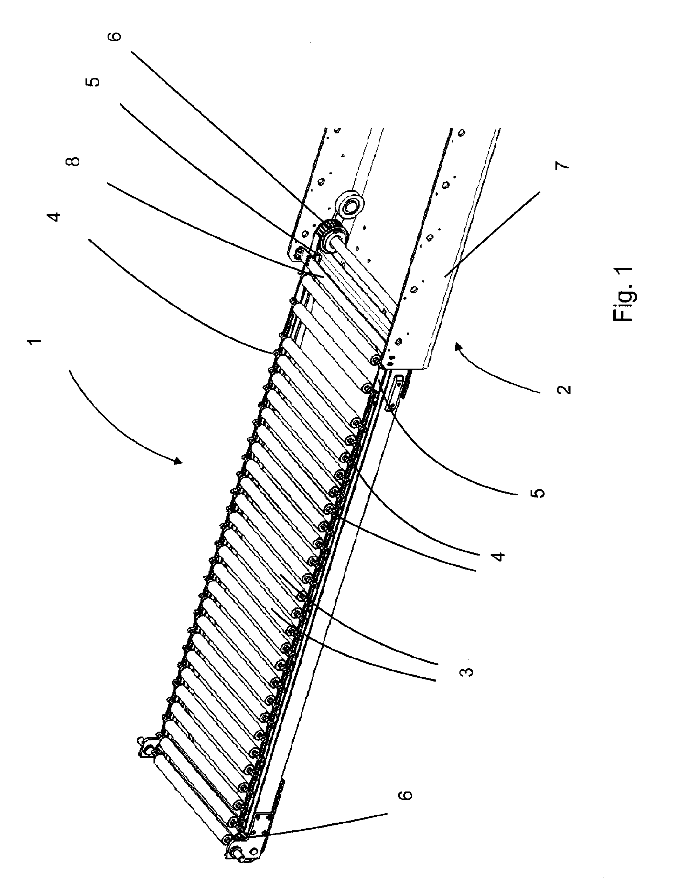

Anhand der Zeichnung wird nachstehen ein Beispiel der Erfindung näher erläutert. Es zeigt
- Fig. 1: eine erfindungsgemäße Unterstützungsbahn mit einem Servicer in ausgefahrenem Zustand in einer perspektivischen Ansicht,
- Fig. 2:

In Fig. 1 ist eine erfindungsgemäße Unterstützungsbahn 1 gezeigt, wobei ein Servicer 2 in ausgefahrenem Zustand nur teilweise dargestellt ist. Die Unterstützungsbahn weist Tragrollen 3 auf, die über Lagerböcke 4 auf seitlich an der Unterstützungsbahn angeordnete, umlaufende Tragbänder 5 angeordnet sind. Die Tragbänder 5 sind als Zahnriemen ausgebildet und laufen auf je zwei Umlenkrollen 6, von denen hier nur zwei sichtbar sind. Vom Servicer 2 ist hier nur sein Gestell 7 mit einem Mitnehmersteg 8 dargestellt. Die Unterstützungsbahn 1 ist derart ausgestaltet, dass sie in das Gestell 7 des Servicers 2 hineinpasst, so dass der Servicer 2 im hier nicht gezeigten Zustand die Unterstützungsbahn 1 vollständig in sich aufnehmen kann.

In der hier gezeigten Stellung ist der Servicer 2 vollständig ausgefahren und alle Tragrollen 3in der Position angeordnet, in der sie mit einem hier nicht gezeigten streifenförmigen Bauteil in Kontakt stehen, welches über die Tragrollen 3 der Unterstützungsbahn 1 auf entsprechende, hier ebenfalls nicht gezeigte Tragelemente des Servicers 2 förderbar ist.

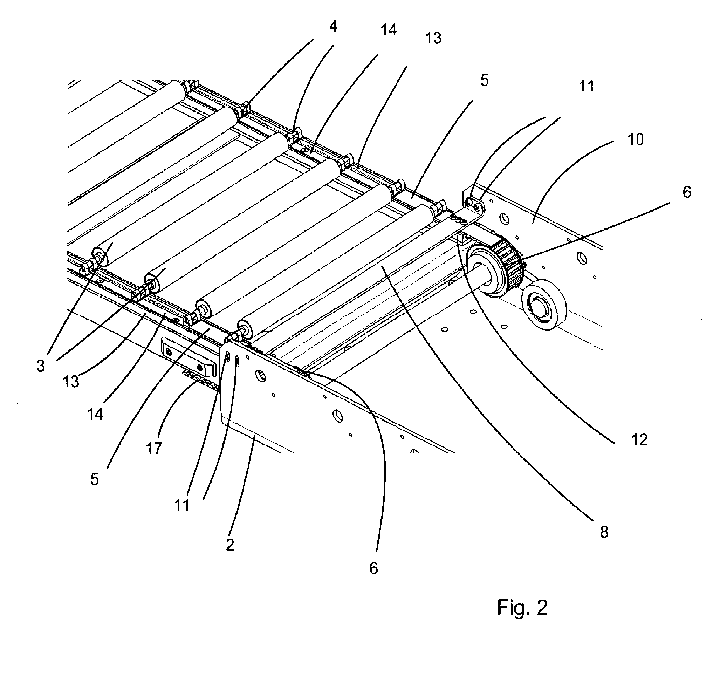

In Fig. 2 ist eine Ausschnittsvergrößerung des Bereiches dargestellt, in dem der Servicer 2 und die Unterstützungsbahn 1 zusammenwirkt. Dabei sind der besseren Übersicht wegen die Tragbänder 5 aufgeschnitten dargestellt, so dass die angrenzenden Bauteile besser sichtbar sind. Der Servicer 2 ist hier ebenfalls vollständig ausgefahren.

Der Mitnehmersteg 8 ist an Seitenwänden 10 des Gestells 7 des Servicers 2 über Langlöcher 11 höhenverstellbar angeschraubt und verläuft quer zur Förderrichtung über die Tragbänder 5 hinweg.

An vorbestimmten Stellen ist der Mitnehmersteg 8 durch hier nicht sichtbare Bohrungen in den Tragbändern 5 je Tragband an je einem Mitnehmerstein 12 fest angeschraubt. Über diese Verbindung sind die Kräfte zum Bewegen der Tragbänder 5 beim Verfahren des Servicers 2 vom Servicer 2 auf die Tragbänder 5 übertragbar.

Die Tragbänder 5 laufen in Führungsschienen 13 aus einem reibungsarmen Kunststoffmaterial. Jede Führungsschiene 13 weist eine Längsnut 14 auf.

Am Servicer 2 ist auf jeder Seite ein dem jeweiligen Tragband 5 zugeordnetes gefedertes Stützrad vorgesehen, welches beim Zurückfahren des Servicers 2 das jeweilige Untertrum der in den Servicer sich hineinbewegenden Tragbänder 5 unterstützt, damit dieses nicht zu stark durchhängt.

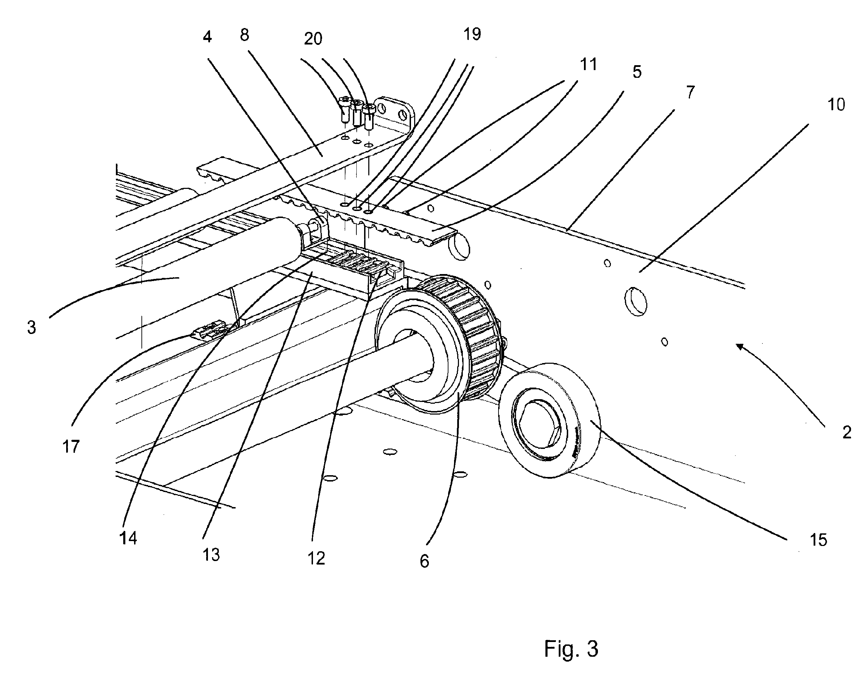

In Fig. 3 sind die Zusammenbauverhältnisse aus Fig. 2 zur besseren Verdeutlichung nochmals als Explosionszeichnug dargestellt. Man erkennt, dass die Tragbänder 5 als Zahnriemen ausgebildet sind. In dieser Darstellung sind auch die Bohrungen 19 sichtbar, durch die der Mitnehmersteg 8 mittels Schrauben 20 mit den Mitnehmersteinen 12 verschraubt ist.

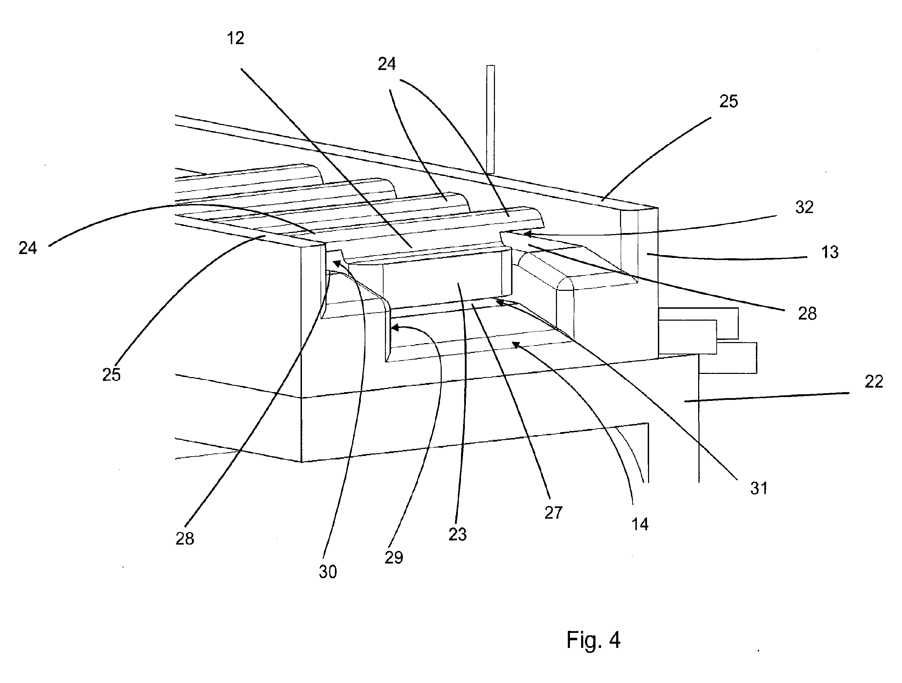

In Fig. 4 ist in einer vergrößerten Explosionszeichnung die Anordnung der Mitnehmersteine 12 in den Führungsschienen 13 dargestellt. Zur besseren Übersicht sind die Tragbänder, der Mitnehmersteg, die Schrauben, Umlenkrollen, Tragrollen und der Servicer hier weggelassen.

Es ist jeweils nur eine Führungsschiene 13 und ein Mitnehmerstein 12 gezeigt, wobei die Anordnung jeweils auch für den weiteren Mitnehmerstein und die weitere Führungsschiene genau gleich ist.

Die Führungsschiene 13 ist auf einem Gestell 22 der Unterstützungsbahn 1 angeordnet und wird von diesem getragen. Der Mitnehmerstein 12 ist T-förmig ausgebildet und weist einen Fuß 23 und Arme 24 auf. Der Fuß 23 läuft in der Längsnut 14 der Führungsschiene 13, die Arme 24 ragen seitlich über die Längsnut 14 hinaus und werden durch Seitenwände 25 der Führungsschiene 13 seitlich geführt.

Durch entsprechende Höhenjustage des hier nicht gezeigten Mitnehmersteges sind zwischen der Unterseite des Fußes 23 und dem Boden 27 der Längsnut 14 sowie zwischen der Unterseite der Arme 24 und seitlichen Auflageflächen 28 der Führungsschiene 13 jeweils Spalte 30, 31 und 32 einstellbar, so dass der Mitnehmerstein 12 nicht mit den Flächen 27 und 28 in Kontakt tritt. Damit tritt hier keine Reibung auf.

Der Fuß 23 des Mitnehmersteins 12 wird seitlich durch Führungsflächen 33 der Längsnut 14 geführt. Da diese Flächen jedoch nur gering belastet sind, ist die Reibkraft hier sehr gering.

Insgesamt lässt sich durch die gezeigte Anordnung der Unterstützungsbahn eine problemlose Überbrückung des Spalts zwischen weiteren Fördereinrichtungen und dem Servicer realisieren, die durch geringe Kräfte ausgezeichnet ist, so dass unzulässige Verformungen des streifenförmigen Bauteils vermieden werden. Durch den Aufbau mit Tragbändern ist auch ein problemloses Zurückfahren des Servicers ohne aufwändige Zugkraftregelung des streifenförmigen Bauteils möglich.

### Bezugszeichenliste

- 1: Unterstützungsbahn
- 2: Servicer
- 3: Tragrollen
- 4: Lagerböcke
- 6: Umlenkrollen
- 7: Gestell des Servicers 2
- 8: Mitnehmersteg
- 10: Seitenwände des Gestells 7
- 11: Langlöcher
- 12: Mitnehmersteine
- 13: Führungsschienen
- 14: Längsnuten in den Führungsschienen 13
- 15: Stützräder
- 17: Untertrums der Tragbänder 5
- 19: Bohrungen in den Tragbändern 5
- 20: Schrauben
- 22: Traggestell der Unterstützungsbahn 1
- 23: Füße der T-förmigen Mitnehmersteine 12
- 24: Arme der T-förmigen Mitnehmersteine 12
- 25: seitliche Begrenzungswände der Führungsschienen 13
- 27: Boden der Längsnuten 14
- 28: seitliche Auflageflächen der Führungsschienen 13
- 30, 31, 32: Spalte zwischen den Mitnehmersteinen 12 und den Führungsschienen 13
- 33: seitliche Kontaktflächen der Längsnuten 14

## Patentansprüche

1. Zuführungseinrichtung für streifenförmige Bauteile zu einer Aufbautrommel, auf der ein ringförmiges Vorfabrikat, insbesondere für Luftreifen oder Luftfederbälge herstellbar ist, mit einer ersten Fördereinrichtung und einem relativ zu der ersten Fördereinrichtung in Förderrichtung verfahrbaren Servicer (2), wobei der Servicer (2) in Linie und in gleicher Höhe mit der ersten Fördereinrichtung die streifenförmigen Bauteile kontaktiert und die streifenförmigen Bauteile von der ersten Fördereinrichtung auf den Servicer (2) übergebbar sind, wobei
die Zuführungseinrichtung eine Unterstützungsbahn (1) aufweist, die beim Ausfahren des Servicers (2) in den Spalt zwischen der ersten Fördereinrichtung und dem Servicer (2) hinein verfahrbar ist und beim Zurückfahren des Servicers (2) aus dem Spalt zwischen der ersten Fördereinrichtung und dem Servicer (2) heraus verfahrbar ist, **dadurch gekennzeichnet, dass** die Unterstützungsbahn (1) bei Auftreten des Spalts zwischen der ersten Fördereinrichtung und dem Servicer (2) mit den streifenförmigen Bauteilen derart in Kontakt steht, dass die streifenförmigen Bauteile in gleicher Höhe mit der ersten Fördereinrichtung und dem Servicer (2) ohne Durchhang von der ersten Fördereinrichtung auf den Servicer (2) förderbar sind.

2. Zuführungseinrichtung nach Anspruch 1, **dadurch gekennzeichnet, dass** die Unterstützungsbahn (1) ein Gestell (22) mit in Förderrichtung seitlich angeordneten Seitenteilen aufweist, wobei an den Seitenteilen umlaufende Bänder (5) angeordnet sind, die an den jeweiligen Enden der Seitenteile durch auf der Unterstützungsbahn (1) ortsfest installierte Umlenkrollen (6) umlenkbar sind, und die durch den Servicer (2) synchron antreibbar sind und an denen jeweils in vorbestimmten Längsabständen eine Vielzahl von paarweise von Band (5) zu Band (5) quer zur Förderrichtung gegenüberliegenden Lagerböcken (4) angeordnet ist, wobei jeweils ein Lagerbockpaar (4) eine Tragrolle (3) aufweist, die in den Lagerböcken (4) drehbar gelagert ist und durch die bei Auftreten des Spalts zwischen erster Fördereinrichtung und Servicer (2) die streifenförmigen Bauteile kontaktierbar sind.

3. Zuführungseinrichtung nach Anspruch 2, **dadurch gekennzeichnet, dass** die Unterstützungsbahn (1) mit ihrem Gestell (22) schmaler ausgebildet ist als der Servicer (2), wobei der Servicer (2) um das Gestell (22) der Unterstützungsbahn (1) herumgreift und derart verfahrbar ist, dass bei eingefahrenem Servicer (2) das Gestell (22) der Unterstützungsbahn (1) im Wesentlichen im Inneren des Servicers (2) angeordnet ist.

4. Zuführungseinrichtung nach Anspruch 3, **dadurch gekennzeichnet, dass** der Servicer (2) einen quer zur Förderrichtung angeordneten Mitnehmersteg (8) aufweist, der durch Bohrungen (19) in den Bändern (5) durch die Bänder (5) hindurch an Mitnehmersteinen (12) befestigbar ist, wobei je ein Mitnehmerstein (12) an der Unterseite jeweils eines Bandes (5) anliegt.

5. Zuführungseinrichtung nach Anspruch 2 oder 3, **dadurch gekennzeichnet, dass** die Bänder (5) in Führungsschienen (13) laufen, die an den Seitenteilen des Gestells (22) der Unterstützungsbahn (1) angeordnet sind und die auf den der Innenseite der Bänder (5) zugewandten Seiten Längsnuten (14) aufweisen, wobei die Längsnuten (14) schmaler sind als die Bänder (5).

6. Zuführungseinrichtung nach Anspruch 4, **dadurch gekennzeichnet, dass** die Mitnehmersteine (12) eine T-Form aufweisen, wobei die T-Arme (24) der T-förmigen Mitnehmersteine (12) der Innenseite der Bänder (5) zugeordnet sind und breiter sind, als die Längsnuten (14) der Führungsschienen (13), so dass die T-Arme (24) der Mitnehmersteine (12) zwischen den Führungsschienen (13) und den Bändern (5) angeordnet sind.

7. Zuführungseinrichtung nach einem der vorhergehenden Ansprüche 4 bis 6, **dadurch gekennzeichnet, dass** der Verbund aus Mitnehmersteg (8), Bändern (5) und Mitnehmersteinen (12) in montiertem Zustand derart eingestellt ist, dass die Arme (24) der T-förmigen Mitnehmersteine (12) und die Böden der Füße (23) der Mitnehmersteine (23) von den korrespondierenden Flächen der Führungsschienen (27, 28) durch einen Spalt (30, 31, 32) beabstandet sind.

8. Zuführungseinrichtung nach einem der vorhergehenden Ansprüche 2 bis 7, **dadurch gekennzeichnet, dass** die Bänder (5) der Unterstützungsbahn (1) als Zahnriemen ausgebildet sind, wobei die Verzahnung auf der Innenseite der umlaufenden Zahnriemen (5) angeordnet ist.

9. Zuführungseinrichtung nach einem der vorhergehenden Ansprüche 2 bis 8, **dadurch gekennzeichnet, dass** die umlaufenden Bänder (5) aus je einem Bandabschnitt vorbestimmter Länge derart ausgebildet sind, dass die Bandabschnitte an ihren Enden stumpf aneinanderstoßend zu einem Ring zusammensetzbar sind und die Stoßstellen im Wesentlichen mittig zwischen dem Mitnehmersteg (8) des Servicers (2) und den jeweiligen Mitnehmersteinen (12) liegen, wobei durch den Mitnehmersteg (8) und die Mitnehmersteine (12) die kraft- und/oder formschlüssige Verbindung der Bandenden zu dem Ring gebildet ist.

10. Zuführungseinrichtung nach einem der vorhergehenden Ansprüche 2 bis 9, **dadurch gekennzeichnet, dass** die Tragrollen (3) synchron zur Fördergeschwindigkeit des streifenförmigen Bauteils durch einen eigenen Antrieb antreibbar sind.

## Claims

1. Device for feeding components in strip form to a building drum, on which an annular preform, in particular for pneumatic tyres or air spring lobes, can be produced, comprising a first conveying device and a servicer (2), which can be made to move in the conveying direction in relation to the first conveying device, wherein the servicer (2) contacts the components in strip form in line with and at the same height as the first conveying device and the components in strip form can be transferred from the first conveying device to the servicer (2), wherein the feeding device has a supporting track (1), which can be made to move into the gap between the first conveying device and the servicer (2) when the servicer (2) is extended and can be made to move out of the gap between the first conveying device and the servicer (2) when the servicer (2) is retracted, **characterized in that**, when the gap between the first conveying device and the servicer (2) occurs, the supporting track (1) is in contact with the components in strip form in such a way that the components in strip form can be conveyed from the first conveying device to the servicer (2) at the same height as the first conveying device and the servicer (2), without sagging.

2. Feeding device according to Claim 1, **characterized in that** the supporting track (1) has a framework (22) with side parts arranged laterally in the conveying direction, wherein circulating belts (2) are arranged on the side parts, can be deflected at the respective ends of the side parts by deflecting rollers (6) fixedly installed on the supporting track (1), and can be driven synchronously by the servicer (2), and arranged on said belts, respectively at predetermined longitudinal intervals, are a multiplicity of bearing blocks (4) lying oppositely transversely in relation to the conveying direction in pairs from belt (5) to belt (5), wherein a pair of bearing blocks (4) respectively has a carrying roller (3), which is rotatably mounted in the bearing blocks (4) and by which the components in strip form can be contacted when the gap between the first conveying device and the servicer (2) occurs.

3. Feeding device according to Claim 2, **characterized in that** the supporting track (1) is formed with its framework (22) narrower than the servicer (2), wherein the servicer (2) reaches around the framework (2) of the supporting track (1) and can be made to move in such a way that the framework (22) of the supporting track (1) is arranged substantially inside the servicer (2) when the servicer (2) is retracted.

4. Feeding device according to Claim 3, **characterized in that** the servicer (2) has a driving web (8), which is arranged transversely in relation to the conveying direction and can be fastened through bores (19) in the belts (5) through the belts (5) to driving keys (12), wherein a driving key (12) in each case lies against the underside respectively of a belt (5).

5. Feeding device according to Claim 2 or 3, **characterized in that** the belts (5) run in guide rails (13), which are arranged on the side parts of the framework (22) of the supporting track (1) and have longitudinal grooves (14) on the sides facing the inner side of the belts (5), wherein the longitudinal grooves (14) are narrower than the belts (5).

6. Feeding device according to Claim 4, **characterized in that** the driving keys (12) have a T shape, wherein the T arms (24) of the T-shaped driving keys (12) are assigned to the inner side of the belts (5) and are wider than the longitudinal grooves (14) of the guide rails (13), so that the T arms (24) of the driving keys (12) are arranged between the guide rails (13) and the belts (5).

7. Feeding device according to one of the preceding Claims 4 to 6, **characterized in that**, in the mounted state, the assembly comprising the driving web (8), the belts (5) and the driving keys (12) is set in such a way that the arms (24) of the T-shaped driving keys (12) and the bases of the feet (23) of the driving keys (12) are kept at a distance from the corresponding surfaces of the guide rails (27, 28) by a gap (30, 31, 32).

8. Feeding device according to one of the preceding Claims 2 to 7, **characterized in that** the belts (5) of the supporting track (1) are formed as toothed belts, wherein the toothing is arranged on the inner side of the circulating toothed belts (5).

9. Feeding device according to one of the preceding Claims 2 to 8, **characterized in that** the circulating belts (5) are each formed by a belt portion of a predetermined length in such a way that the belt portions can be put together at their ends, butting flush against one another to form a ring, and the butt joints lie substantially midway between the driving web (8) of the servicer (2) and the respective driving keys (12), wherein the non-positive and/or positive connection of the ends of the belt to form the ring is formed by the driving web (8) and the driving keys (12).

10. Feeding device according to one of the preceding Claims 2 to 9, **characterized in that** the carrying rollers (3) can be driven synchronously in relation to the conveying speed of the component in strip form by a drive of their own.

## Revendications

1. Dispositif pour acheminer des composants en forme de ruban à un tambour de montage, sur lequel peut être fabriqué un produit préfabriqué de forme annulaire, notamment pour pneumatiques ou soufflets de ressorts pneumatiques, comprenant un premier dispositif de transport et un dispositif d'amenée (2) déplaçable par rapport au premier dispositif de transport dans la direction de transport, le dispositif d'amenée (2) venant en contact avec les composants en forme de ruban en ligne et à la même hauteur que le premier dispositif de transport et les composants en forme de ruban pouvant être transférés du premier dispositif de transport au dispositif d'amenée (2),
le dispositif d'acheminement présentant une bande de soutien (1) qui, lors de la sortie du dispositif d'amenée (2), peut être introduite dans la fente entre le premier dispositif de transport et le dispositif d'amenée (2), et lors du retour du dispositif d'amenée (2) peut être ressortie de la fente entre le premier dispositif de transport et le dispositif d'amenée (2), **caractérisé en ce que** la bande de soutien (1), lors de la création de la fente entre le premier dispositif de transport et le dispositif d'amenée (2), est en contact avec les composants en forme de ruban de telle sorte que les composants en forme de ruban puissent être transportés à la même hauteur que le premier dispositif de transport et le dispositif d'amenée (2) sans affaissement depuis le premier dispositif de transport jusqu'au dispositif d'amenée (2).

2. Dispositif d'acheminement selon la revendication 1, **caractérisé en ce que** la bande de soutien (1) présente un bâti (22) avec des parties latérales disposées latéralement dans la direction de transport, des bandes entraînées en rotation (5) étant disposées au niveau des parties latérales, lesquelles bandes peuvent être déviées au niveau des extrémités respectives des parties latérales par des rouleaux de renvoi (6) installés fixement sur la bande de soutien (1), et lesquelles bandes peuvent être entraînées de manière synchrone par le dispositif d'amenée (2) et au niveau desquelles est disposé, à chaque fois à des distances longitudinales prédéterminées, une pluralité de coussinets (4) en regard par paires d'une bande (5) à l'autre (5) transversalement à la direction de transport, une paire de coussinets (4) présentant à chaque fois un rouleau de support (3) qui est supporté à rotation dans les coussinets (4) et avec lequel les composants en forme de ruban peuvent être mis en contact lors de la création de la fente entre le premier dispositif de transport et le dispositif d'amenée (2).

3. Dispositif d'acheminement selon la revendication 2, **caractérisé en ce que** la bande de soutien (1) est réalisée avec son bâti (22) sous forme plus étroite que le dispositif d'amenée (2), le dispositif d'amenée (2) venant en prise autour du bâti (22) de la bande de soutien (1) et étant déplaçable de telle sorte que lorsque le dispositif d'amenée (2) est introduit, le bâti (22) de la bande de soutien (1) soit disposé essentiellement à l'intérieur du dispositif d'amenée (2).

4. Dispositif d'acheminement selon la revendication 3, **caractérisé en ce que** le dispositif d'amenée (2) présente une nervure d'entraînement (8) disposée transversalement à la direction de transport, laquelle peut être fixée par des alésages (19) dans les bandes (5) à travers les bandes (5) au niveau de tenons d'entraînement (12), chaque tenon d'entraînement (12) s'appliquant contre le côté inférieur d'une bande respective (5).

5. Dispositif d'acheminement selon la revendication 2 ou 3, **caractérisé en ce que** les bandes (5) passent dans des rails de guidage (13) qui sont disposés au niveau des parties latérales du bâti (22) de la bande de soutien (1) et qui présentent des rainures longitudinales (14) sur les côtés tournés vers le côté intérieur des bandes (5), les rainures longitudinales (14) étant plus étroites que les bandes (5).

6. Dispositif d'acheminement selon la revendication 4, **caractérisé en ce que** les tenons d'entraînement (12) présentent une forme en T, les bras du T (24) des tenons d'entraînement en forme de T (12) étant associés au côté intérieur des bandes (5) et étant plus larges que les rainures longitudinales (14) des rails de guidage (13), de sorte que les bras du T (24) des tenons d'entraînement (12) soient disposés entre les rails de guidage (13) et les bandes (5).

7. Dispositif d'acheminement selon l'une quelconque des revendications précédentes 4 à 6, **caractérisé en ce que** l'assemblage constitué de la nervure d'entraînement (8), des bandes (5) et des tenons d'entraînement (12) dans l'état monté est ajusté de telle sorte que les bras (24) des tenons d'entraînement en forme de T (12) et les fonds des bases (23) des tenons d'entraînement (12) soient espacés des surfaces correspondantes des rails de guidage (27, 28) par une fente (30, 31, 32).

8. Dispositif d'acheminement selon l'une quelconque des revendications précédentes 2 à 7, **caractérisé en ce que** les bandes (5) de la bande de soutien (1) sont réalisées sous forme de courroies dentées, la denture étant disposée sur le côté intérieur de la courroie dentée (5) entraînée en rotation.

9. Dispositif d'acheminement selon l'une quelconque des revendications précédentes 2 à 8, **caractérisé en ce que** les bandes (5) entraînées en rotation sont réalisées à partir d'une section de bande de longueur prédéterminée de telle sorte que les sections de bande puissent être assemblées au niveau de leurs extrémités bout à bout pour former une boucle, et les points d'aboutement étant situés sensiblement centralement entre la nervure d'entraînement (8) du dispositif d'amenée (2) et les tenons d'entraînement respectifs (12), la connexion par engagement par force et/ou par correspondance de forme des extrémités des bandes pour former la boucle étant réalisée par la nervure d'entraînement (8) et les tenons d'entraînement (12).

10. Dispositif d'acheminement selon l'une quelconque des revendications précédentes 2 à 9, **caractérisé en ce que** les rouleaux de support (3) peuvent être entraînés de manière synchronisée avec la vitesse de transport du composant en forme de ruban, par un entraînement propre.
